# EUROPÄISCHE PATENTSCHRIFT

(11) **EP 1 618 160 B1**
(45) Veröffentlichungstag und Bekanntmachung des Hinweises auf die Patenterteilung: **25.07.2007**
(21) Anmeldenummer: 04726469.2
(22) Anmeldetag: 08.04.2004
(51) Int. Cl.: C09D 11/00, C09D 11/02

(54) **LEICHT DISPERGIERBARE PIGMENTE MIT SCHNELLER FARBSTRKEENTWICKLUNG**
EASILY DISPERSIBLE PIGMENTS WITH FAST COLOUR INTENSITY DEVELOPMENT
PIGMENTS FACILEMENT SOLUBLES A FORT POUVOIR COLORANT

(30) Priorität: 22.04.2003 DE 10318235
(43) Veröffentlichungstag der Anmeldung: 25.01.2006
(73) Patentinhaber: Clariant Produkte (Deutschland) GmbH, 65929 Frankfurt am Main (DE)
(72) Erfinder: OSTEROD, Frank, 65835 Liederbach (DE); PLÜG, Carsten, 64342 SeeheimJugenheim/Ober-Beerbach (DE); METZ, Hans-Joachim, 64285 Darmstadt (DE)
(86) Internationale Anmeldenummer: PCT/EP2004/003760
(87) Internationale Veröffentlichungsnummer: WO 2004/094540

(56) Entgegenhaltungen:
- EP-A- 0 976 798
- EP-A- 1 291 397
- US-A- 5 679 148
- US-A- 5 990 202
- US-A1- 2002 086 916

## Beschreibung

Die Oberflächenmodifizierung von Pigmenten mit Hilfe von Pigmentderivaten und niedermolekularen Verbindungen ist bekannt, jedoch ist die Leistungsfähigkeit im Hinblick auf eine gute Dispergierbarkeit im Anwendungsmedium vielfach nicht ausreichend.

Einfach dispergierbare Pigmente bzw. feste Pigmentpräparationen, die in der Fachliteratur auch unter der Bezeichnung Stir-in Pigmente zu finden sind, sind schon vielfach untersucht worden. Um eine universelle gute Verträglichkeit mit dem Anwendungsmedium zu gewährleisten, ist eine hohe Pigmentkonzentration zu wählen, die in vielen flüssigen Pigmentpräparationen nicht zu erzielen ist.

In der EP-0 902 061 wird beschrieben, dass durch eine Oberflächenbelegung mit Vinylpyrrolidon-Polymer bzw. -Copolymer ein modifiziertes Pigmentpulver erhalten wird, das sich ohne Verwendung einer Kugelmühle in ein wässriges Druck- und Mahlsystem einarbeiten lässt.

Die EP-0 702 062 beschreibt die Modifizierung von Pigmenten mit Kolophonium, wobei eine wässrige Suspension aus Pigment, Alkalisalz einer Kolophoniumsäure und einem Füllstoff in einer Horizontalkugelmühle gemahlen wird. Durch Zugabe eines Metallsalzes kann das Einrührpigment isoliert werden.

Die WO 02/26892 offenbart ein Verfahren zur Herstellung von polymerumhüllten Pigmentteilchen, bei dem in Gegenwart fein verteilter Pigmentteilchen eine Lösung eines Polymers in einem ersten Lösungsmittel mit einem zweiten Lösungsmittel gemischt wird, in dem das Polymer nicht oder nur kaum löslich ist und das mit dem ersten Lösungsmittel mischbar ist. Die Pigmentteilchen können vor dem Vermischen fein verteilt in der Lösung des Polymers in dem ersten Lösungsmittel und/oder fein verteilt in dem zweiten Lösungsmittel vorliegen. Durch das turbulente Mischen der beiden Lösungsmittel wird die Löslichkeitsgrenze des Polymers überschritten und auf der Pigmentoberfläche ausgefällt. Es verkapselt somit die Pigmentteilchen. Dieses Verfahren hat jedoch den Nachteil, dass das Produkt eine Pigmentdispersion mit geringem Pigmentgehalt ist und die Dispersion zudem ökologisch bedenkliche organische Lösungsmittel enthält. Die Isolierung der polymerumhüllten Pigmentteilchen erfordert auch hier eine kostenintensive Destillation beider Lösungsmittel oder energieintensive Sprühtrocknung.

Die US-A-5,679,148 beschreibt ein Verfahren zum Pigmentieren eines lösemittelhaltigen nicht-wässrigen organischen Beschichtungsmaterials, welches ein mit aminogruppenhaltigen (Meth)Acrylatpolymeren gecoatetes feinteiliges organisches Pigment enthält.
Die EP-A-0 976 789 beschreibt die Herstellung einer Ink-Jet-Tinte, die aus einem Farbmittel aufgebaut ist, welches wasserlöslich ist und ein Polymer beinhaltet, das über eine kovalente Bindung an das Farbmittel gebunden ist.
Die US-A-2002/086916 betrifft ein Verfahren zur Polymerbehandlung von Farbpartikeln und Herstellung einer Tinte.

Es bestand nun die Aufgabe, ein technisch einfaches und ökologisch unbedenkliches Verfahren zum Pigmentieren von lösemittelhaltigen, organischen Beschichtungsmaterialien, wie Lacke und Tinten, bereitzustellen, bei dem sich organische Pigmente mit möglichst geringen Scherkräften und möglichst hoher und schneller Farbstärkeentwicklung in besagte organische Lacke und Tinten einarbeiten lassen.

Überraschenderweise wurde gefunden, dass mit bestimmten Copolymeren oberflächenbelegte Pigmente sich sehr gut als Stir-in Pigmente für organische Beschichtungsmaterialien bei gleichzeitig gesteigerter Farbstärkeentwicklung eignen.

Gegenstand der Erfindung ist ein Verfahren zum Pigmentieren eines lösemittelhaltigen, nicht wässrigen organischen Beschichtungsmaterials, dadurch gekennzeichnet, dass ein wässriger, gefinishter Presskuchen eines organischen Pigments mit Wasser vermischt und in Gegenwart eines aminguppenhaltigen (Meth)Acrylatcopolymers in einem statischen Mischer desagglomeriert wird, dann einer Wasserdampfdestillation unterzogen, filtriert und getrocknet wird, und das dabei entstandene mit amingruppenhaltigen (Meth)Acrylatcopolymeren gecoatete feinteilige organische Pigment mit einem im Vergleich zu dem entsprechenden nicht gecoateten Pigment um mindestens 20 % reduziertem Energieeintrag in ein lösemittelhaltiges organisches Beschichtungsmaterial eingearbeitet wird.

Die erfindungsgemäß hergestellten Stir-in Pigmente entwickeln ihre hohe Farbstärke durch einfaches, kurzes Einrühren in das lösemittelhaltige organische Beschichtungsmaterial, beispielsweise durch 5 minütiges bis 3 stündiges Rühren, vorzugsweise 15 bis 45 minütiges Rühren, in einem Dissolver mit Zahnscheibe, so dass auf weitergehende kostenintensive Dispergierschritte in dem genannten Anwendungsmedium verzichtet werden kann.
Auch die Herstellung der gecoateten Pigmente zeichnet sich durch eine einfache Verfahrensführung aus. Eine aufwendige Isolation durch kostenintensive Destillationsschritte der gesamten flüssigen Phase oder durch Sprühtrocknung ist nicht notwendig. Auch ist das erfindungsgemäße Verfahren prinzipiell auf alle organischen Pigmente anwendbar, da auf eine starke pH-Wert Änderung, wie sie in EP-0 702 062 zum Herstellen von Stir-in Pigmenten mittels löslicher Alkalisalze von verschiedenen Harzen beschrieben wird, verzichtet wird.

Der besagte wässrige Presskuchen des organischen Pigments besteht aus feinverteiltem, z.B. gemahlenem, und gegebenenfalls gefinishtem Pigment. Die jeweils günstigsten Feinverteilungs- und Finishmethoden sind von der Art des Pigments abhängig und dem Fachmann bekannt. Der wässrige Presskuchen wird mit Wasser auf einen Feststoffgehalt von vorzugsweise 5 bis 30 Gew.-% verdünnt.
Die so erhaltene wässrige Suspension wird mit einer Lösung des amingruppenhaltigen (Meth)Acrylatcopolymers oder einer Mischung solcher Copolymere versetzt. Die Menge dieser Lösung wird dabei so bemessen, dass das amingruppenhaltige (Meth)Acrylatcopolymer letztlich in einer Menge von 5 bis 50 Gew.-%, insbesondere 10 bis 40 Gew.-%, bezogen auf das Gesamtgewicht des gecoateten Pigments, auf dem Pigment aufgebracht ist. Als Lösungsmittel für die amingruppenhaltigen (Meth)Acrylatcopolymere kommen insbesondere nicht oder schlecht mit Wasser mischbare organische Lösungsmittel wie z.B. Butylacetat, 1-Butanol, 2-Butanol, Isobutanol oder auch Lösungsmittelmischungen dieser Lösungsmittel untereinander sowie mit Methoxypropylacetat in Betracht.

In einer besonders bevorzugten Ausführungsform wird die Suspension während und/oder nach der Zugabe des amingruppenhaltigen (Meth)Acrylatcopolymers in einem statischen Mischer einer Desagglomeration unterzogen, wobei es besonders vorteilhaft ist, die Suspension mehrfach im Kreis durch den statischen Mischer hindurch zu pumpen, bis eine Teilchengröße d₅₀ von 0,05 bis 40 µm, insbesondere 0,1 bis 10 µm, erreicht ist.

Bei einem statischen Mischer handelt es sich um Zerkleinerungsmaschinen wie Kugelmühlen und Perlmühlen mit Glas-, Porzellan- oder Stahlkugeln. Außerdem sind auch Dissolver und Zerkleinerungsmaschinen mit Rotor Stator Prinzip möglich. In einer besonders bevorzugten Ausführungsform wird eine Rotor Stator Maschine mit hohem Umfangsgeschwindigkeiten verwendet. Alle Konstruktionen haben gemeinsam, dass ein hoher Energieanteil wirksam zur Zerkleinerung der Pigmentteilchen verwendet werden kann.

Die Isolierung des Stir-in Pigmentes erfolgt durch Entfernung des organischen Lösungsmittels unter Zurückerhaltung einer wässrigen Suspension. Eine Wasserdampfdestillation erweist sich als besonders günstig. Das oberflächenbelegte leicht dispergierbare Stir-in Pigment wird durch Filtration und abschließende Trocknung erhalten. Falls das erhaltene Stir-in-Pigment grobkörnig anfällt, wird es zweckmäßigerweise noch einer Trockenmahlung unterzogen. Die erfindungsgemäß hergestellten gecoateten Pigmente weisen in der Regel eine spezifische Oberfläche (BET) zwischen 5 und 30 m²/g, vorzugsweise 7 und 20 m²/g, insbesondere 8 und 15 m²/g, auf.

Das organische Pigment kann ein Pigment aus der Gruppe der Azopigmente, wie Monoazo-, Disazo-, Naphtol-, Benzimidazolon-, Metallkomplexpigmente, oder der polyzyklischen Pigmente, wie Isoindolinon-, Isoindolin-, Anthanthron-, Thioindigo-, Thiazinindigo-, Triarylcarbonium-, Chinophthalon-, Anthrachinon-, Dioxazin-, Phthalocyanin-, Chinacridon-, Chinacridonchinon-, Indanthron, Perylen-, Perinon-, Pyranthron-, Diketopyrrolopyrrol-, Isoviolanthron- und Azomethinpigmente, sein.

Bevorzugte organische Pigmente im Sinne der vorliegenden Erfindung sind beispielsweise C.I. Pigment Yellow 1 (C.I. No. 11 680), C.I. Pigment Yellow 3 (C.I. No. 11 710), C.I. Pigment Yellow 12 (C.I. No. 21 090), C.I. Pigment Yellow 13 (C.I. No. 21 100), C.I. Pigment Yellow 14 (C.I. No. 21 095), C.I. Pigment Yellow 17 (C.I. No. 21 105), C.I. Pigment Red 123 (C.I. No. 71 145), C.I. Pigment Red 149 (C.I. No. 71 137), C.I. Pigment Red 178 (C.I. No. 71 155), C.I. Pigment Red 179 (C.I. No. 71 130), C.I. Pigment Red 190 (C.I. 71 140), C.I. Pigment Red 224 (C.I. No. 71 127), C.I. Pigment Violet 29 (C.I. No. 71 129), C.I. Pigment Orange 43 (C.I. No. 71 105), C.I. Pigment Red 194 (C.I. No. 71 100), C.I. Pigment Violet 19 (C.I. No. 73 900), C.I. Pigment Red 122 (C.I. No. 73 915), C.I. Pigment Red 192, C.I. Pigment Red 202 (C.I. No. 73 907), C.I. Pigment Red 207, C.I. Pigment Red 209 (C.I. No. 73 905), C.I. Pigment Red 206 (C.I. No. 73 900/73 920), C.I. Pigment Orange 48 (C.I. No. 73 900/73 920), C.I. Pigment Orange 49 (C.I. No. 73 900/73 920), C.I. Pigment Orange 42, C.I. Pigment Yellow 147, C.I. Pigment Red 168 (C.I. No. 59 300), C.l. Pigment Yellow 120 (C.l. No. 11 783), C.I. Pigment Yellow 151 (C.l. No. 13 980), C.l. Pigment Brown 25 (C.l. No. 12 510), C.l. Pigment Violet 32 (C.l. No. 12 517), C.l. Pigment Orange 64; C.l. Pigment Brown 23 (C.I. No. 20 060), C.I. Pigment Red 166 (C.l. No. 20 730), C.l. Pigment Red 170 (C.I. No. 12 475), C.I. Pigment Orange 38 (C. l. No. 12 367), C.I. Pigment Red 188 (C.l. No. 12 467), C.l. Pigment Red 187 (C.l. No. 12 486), C.I. Pigment Orange 34 (C.l. No. 21 115), C.I. Pigment Orange 13 (C.I. No. 21 110), C.l. Pigment Red 9 (C.I. No. 12 460), C.l. Pigment Red 2 (C.l. No. 12 310), C.I. Pigment Red 112 (C.I. No. 12 370), C.l. Pigment Red 7 (C.l. No. 12 420), C.l. Pigment Red 210 (C.l. No. 12 477), C.l. Pigment Red 12 (C.l. No. 12 385), C.l. Pigment Blue 60 (C.I. No. 69 800), C.I. Pigment Green 7 (C.I. No. 74 260), C.I. Pigment Green 36 (C.I. No. 74 265); C.I. Pigment Blue 15:1, 15:2, 15:3, 15:4, 15:6 und 15 (C.I. No. 74 160); C.I. Pigment Blue 56 (C.I. No. 42 800), C.I. Pigment Blue 61 (C.I. No. 42 765:1), C.I. Pigment Violet 23 (C.I. No. 51 319), C.I. Pigment Violet 37 (C.I. No. 51 345), C.I. Pigment Red 177 (C.I. No. 65 300), C.l. Pigment Red 254 (C.I. No. 56 110), C.I. Pigment Red 255 (C.I. No. 56 1050), C.I. Pigment Red 264, C.I. Pigment Red 270, C.I. Pigment Red 272 (C.I. No. 56 1150), C.I. Pigment Red 71, C.I. Pigment Orange 73, C.I. Pigment Red 88 (C.I. No. 73 312), C.I. Pigment Yellow 175 (C.I. No. 11 784), C.I. Pigment Yellow 154 (C.I. No. 11 781), C.I. Pigment Yellow 83 (C.I. No. 21 108), C.I. Pigment Yellow 180 (C.I. No. 21 290), C.I. Pigment Yellow 181 (C.I. No. 11 777), C.I. Pigment Yellow 74 (C.I. No. 11 741), C.I. Pigment Yellow 213, C.I. Pigment Orange 36 (C.I. No. 11 780), C.I. Pigment Orange 62 (C.I. No. 11 775), C.I. Pigment Orange 72, C.I. Pigment Red 48:2/3/4 (C.I. No. 15 865:2/3/4), C.I. Pigment Red 53:1 (C.I. No. 15 585:1), C.I. Pigment Red 208 (C.I. No. 12 514), C.I. Pigment Red 185 (C.l. No. 12 516), C.l. Pigment Red 247 (C.l. No. 15 915) und C.l. Pigment Red 146 (C.l. No. 12 485).

Es können auch mehr als ein organisches Pigment oder Mischkristalle (solid solutions) von organischen Pigmenten eingesetzt werden.

Besonders bevorzugte Pigmente sind C. 1. Pigment Violett 23 (C. I. No. 51319) und C.I. Pigment Orange 36 (C.I. No. 11780).

Die amingruppenhaltigen (Meth)Acrylatcopolymere sind modifizierte Acrylatcoploymere und Methacrylatcopolymere mit einer Aminzahl von vorzugsweise 20 bis 70 mg KOH/g, besonders bevorzugt 25 bis 55 mg KOH/g. Die Molmasse geeigneter, modifizierter Acrylatcopolymere bzw. Methacrylatcopolymere liegt vorzugsweise zwischen 2000 und 100 000 g/mol. Besonders geeignete Copolymere haben Molmassen zwischen 5000 und 30 000 g/mol. Die Aminogruppen können auch quaternisiert sein und z.B. als Ammoniumsalz vorliegen.

Bei den modifizierten Acrylatcopolymeren und Methacrylatcopolymeren kann es sich um Blockcopolymere, Pfropfcopolymere oder um statistische Copolymere handeln. Auch der Einsatz spezieller Macromonomere ist möglich. Das Copolymer kann Monomerbausteine aus der Gruppe der Acrylsäure und Methacrylsäure enthalten, wie z.B. Methyl(meth)acrylat, Ethyl(meth)acrylat, n-Propyl(meth)acrylat, n-Butyl(meth)acrylat, Isopropyl(meth)acrylat, Isobutyl(meth)acrylat, , Amyl(meth)acrylat, Isoamyl(meth)acrylat, Hexyl(meth)acrylat, 2-Hydroxyethyl(meth)acrylat, 2-Hydroxypropyl(meth)acrylat, N,N-Diethylaminoethyl(meth)acrylat, N,N-Dimethylaminoethyl(meth)acrylat, N,N-Dipropylaminoethyl(meth)acrylat, N,N-Dibutylaminoethyl(meth)acrylat, N,N-Dihexylaminoethyl(meth)acrylat, N,N-Diethylaminobutyl(meth)acrylat, N,N-Dimethylaminobutyl(meth)acrylat, N,N-Dipropylaminobutyl(meth)acrylat, N,N-Dibutylaminobutyl(meth)acrylat, N,N-Dihexylaminobutyl(meth)acrylat, N,N-Diethylaminopropyl(meth)acrylat, N,N-Dimethylaminopropyl(meth)acrylat, N,N-Dipropylaminopropyl(meth)acrylat, N,N-Dibutylaminopropyl(meth)acrylat, N,N-Dihexylaminopropyl(meth)acrylat, N,N-Diethylaminohexyl(meth)acrylat, N,N-Dimethylaminohexyl(meth)acrylat, N,N-Dipropylaminohexyl(meth)acrylat, N,N-Dibutylaminohexyl(meth)acrylat, N,N-Dihexylaminohexyl(meth)acrylat, Benzyl(meth)acrylat, Allyl(meth)acrylat, 2-n-Butoxyethyl(meth)acrylat, 2-sec-Butyl(meth)acrylat, tert.-Butyl(meth)acrylat, 2-Ethylbutyl(meth)acrylat, Cyclohexyl(meth)acrylat, 2-Ethoxyethyl(meth)acrylat, 3-Methoxybutyl(meth)acrylat, 2-Methoxybutyl(meth)acrylat, n-Octyl(meth)acrylat, 2-Ethylhexyl(meth)acrylat, 2-Phenylethyl(meth)acrylat, Phenoxyethyl(meth)acrylat, Phenyl(meth)acrylat. Weitere mögliche Monomerbausteine sind: Styrol, α-Methylstyrol, Vinyltoluol, Acrylsäure, Methacrylsäure, 9-Vinylanthracen, 9-Vinylcarbazol, Vinylcyclohexan, 1-Vinylimidazol, 2-Vinylpyridin, 1-Vinyl-1,2,4-triazol, Acrylnitril. Das Copolymer besitzt keinen oder nur geringen hydrophilen Charakter.

Das Anwendungsmedium, d.h. das zu pigmentierende organische Beschichtungsmaterial kann ein lösungsmittelhaltiger Einbrennlack, ein lösungsmittelhaltiger Zweikomponentenlack, eine Drucktinte oder Ink-Jet-Tinte sein. Lösungsmittelhaltig bedeutet in diesem Zusammenhang, dass die gängigen Lösungsmittel, die in der Lackindustrie Anwendung finden, mit Ausnahme von Wasser geeignet sind.

Beispiele für geeignete Lacke sind Alkyd-Melamin-Harzlacke, Acryl-Melamin-Harzlacke, Polyesterlacke und Highsolid-Acrylharzlacke.
Besonders geeignete Anwendungssysteme für die oberflächenmodifizierten, leicht dispergierbaren Pigmente sind Alkyd-Melaminharzlacke auf Basis eines mittelöligen Alkydharzes und eines butanolveretherten Melaminharzes. Das Verhältnis Alkydharz zu Melaminharz im entsprechenden Lack beträgt vorteilhaft zwischen 70:30 und 80:20. Ebenfalls geeignet sind Zweikomponentenlacke auf Basis eines mit Isocyanat vernetzbaren Acrylharzes.

Solvent based Ink-Jet-Tinten können 0,5 bis 15 Gew.-% des erfindungsgemäßen Stir-in Pigments, 85 bis 99,5 Gew.-% organisches Lösemittel und/oder hydrotrope Verbindungen enthalten.

Bei den in Aufzeichnungsflüssigkeiten enthaltenen Lösemitteln und/oder Feuchthaltemitteln kann es sich um ein- oder mehrwertige Alkohole, deren Ether und Ester, z.B. Methanol, Ethanol, Propanol, Isopropanol, Butanol, Isobutanol; zwei- oder dreiwertige Alkohole, insbesondere mit 2 bis 6 C-Atomen, z.B. Ethylenglykol, Propylenglykol, 1,3-Propandiol, 1,4-Butandiol, 1,5-Pentandiol, 1,6-Hexandiol, 1,2,6-Hexantriol, Glycerin, Diethylenglykol, Dipropylenglykol, Triethylenglykol, Polyethylenglykol, Tripropylenglykol, Polypropylenglykol; niedere Alkylether von mehrwertigen Alkoholen, wie z.B. Ethylenglykol-mono-methyl, -ethyl- oder -butyl-ether, Triethylenglykol-mono-methyl- oder -ethyl-ether; Ketone und Ketonalkohole wie z.B. Aceton, Methylethylketon, Diethylketon, Methylisobutylketon, Methylpentylketon, Cyclopentanon, Cyclohexanon, Diacetonalkohol; Amide, wie z.B. Dimethylformamid, Dimethylacetamid, N-Methylpyrrolidon; ferner Harnstoff, Tetramethylharnstoff, Thiodiglykol und ε-Caprolactam handeln.

Die Beispiele 1 bis 3 beschreiben die Herstellung der oberflächenbelegten, leicht dispergierbaren Pigmente und die Beispiele 1 - V die Einarbeitung in einen Alkyd-Melamin-Lack. Bei der Einwaage der oberflächenmodifizierten Pigmente wurde die Oberflächenbelegung durch eine Korrektur der Einwaage ausgeglichen. Prozentangaben bedeuten Gewichtsprozente.

### Beispiel 1

Eine Suspension aus 364 g Pigment Violett 23 (C.I. No. 51319, als Presskuchen eingesetzt) und 2500 g Wasser werden mit einem statischen Mischer (Laborpilot 2000, IKA, D-79219 Staufen) 1 Stunde bei 6000 min-1 deagglomeriert. Zu der Suspension wird eine Lösung aus 156 g modifiziertem Acrylatcopolymer (10 % Vinylimidazol, 90 % Butylmethacrylat, Aminzahl: 30 mg KOH/g, Mₙ = 13 500 g/mol, M_{w} = 31 000 g/mol), 144 g Methoxypropylacetat und 2310 ml Isobutanol zugegeben. Die Reaktionsmischung wird weitere 60 min mit dem statischen Mischer deagglomeriert. Nach einer Wasserdampfdestillation wird das oberflächenmodifizierte Pigment Violett 23 abfiltriert und bei 60°C im Trockenschrank getrocknet. Nach einer abschließenden Trockenmahlung (in mehreren Portionen mit IKA M 20 Mühle) erhält man 452 g leicht dispergierbares Pigment Violett.

### Beispiel 2:

293,4 g Pigment Violett 23 (C. I. No. 51319, als Presskuchen eingesetzt) werden mit 2,4 Wasser versetzt und grob homogenisiert. Danach wird die Suspension für 30 min an einer DCP Superflow 12 Mühle (Firma Drais) mit einer mittleren Verweilzeit von 4 min gemahlen. Nach Beendigung der Mahlung werden 400 g der obigen Suspension (Feststoffgehalt: 9,68 %) in einen 2 I Kolben mit KPG-Rührer gegeben und unter Rühren mit einer Lösung aus 16,6 g Acrylatcopolymer (10 % Vinylimidazol, 90 % Butylmethacrylat, Aminzahl: 30 mg KOH/g, Mₙ = 13 500 g/mol, M_{w} = 31 000 g/mol), 14,4 g Methoxypropylacetat, 1,0 g n-Butylacetat und 295 ml Isobutanol versetzt und die Reaktionsmischung 90 min bei 40°C gerührt. Im Anschluss erfolgt eine Wasserdampfdestillation, in deren Verlauf 360 ml organische Phase abgetrennt werden. Während der Wasserdampfdestillation bilden sich kleine, 1-2 mm große Pigmentkügelchen. Diese werden abfiltriert, mit Wasser gewaschen und bei 60°C im Trockenschrank getrocknet. Nach einer abschließenden Trockenmahlung (in mehreren Portionen mit IKA M 20 Mühle) erhält man ein leicht dispergierbares Violett Pigment.

### Beispiel 3:

100 g Pigment Orange 36 (C.l. No. 11780, als Presskuchen eingesetzt) werden an einem Dissolver mit Zahnscheibe mit 100 ml Isobutanol versetzt und 10 min bei 1500 upm dispergiert. Danach wird eine Lösung aus 11,2 g Acrylatcopolymer (10 % Vinylimidazol, 90 % Butylmethacrylat) in Methoxypropylacetat und Isobutanol zugegeben und eine weitere Stunde bei 1500 upm gerührt. Im Anschluss erfolgt eine Wasserdampfdestillation zur Entfernung des organischen Lösungsmittels. Nach abschließender Filtration, Trocknung bei 60°C und Trockenmahlung (in mehreren Portionen mit IKA M 20 Mühle) erhält man ein leicht dispergierbares Orange Pigment.

Die in den Beispielen 1 bis 3 hergestellten Pigmente werden in einem Alkyd Melamin Einbrennlack getestet. Das Lacksystem besteht aus einem Anreibelack, einem Auflackgemisch und einem Weißlack:
Anreibelack:
   35 %ige und 50 %ige Polyesterharzlösung in Solvesso 100 Auflackgemisch: 26,4 g Polyesterharzlösung, 29,4 g Alkydharzlösung, 35,8 g Melaminharzlösung, 6,2 g Hochsiedergemisch, 2,2 g Solvesso 100 Weißlack (30 %ig):
   Standard Weißlack basierend auf Kronos TiO₂, Polyesterharzlösung, Alkydharzlösung, Additive, Solvesso 100

### Beispiel I: Vergleichsbeispiel

Zur Herstellung des Volltonlacks werden 21,0 g Alkydmelamin Anreibelack und 9,0 g Pigment Orange 36 (C.l. No. 11780) zusammen mit 85 g Glasperlen (3 mm) 30 min an einem Scandex-Mischer (BA-S 20, Scandex, Bromma, Schweden) dispergiert. Danach gibt man unter langsamem Rühren mit einem Glasstab 60 g Auflackgemisch zu und dispergiert nochmals für 3 min am Scandex-Mischer. Im Anschluss werden die Glasperlen durch Filtration entfernt.

Zur Herstellung der Aufhellung werden 6,0 g des obigen Volltonlacks mit 20 g Alkydmelaminweißlack (30 %) durch einfaches Einrühren homogenisiert.

### Beispiel II:

In einem Dissolver mit Zahnscheibe (VMA-Getzmann GmbH, D-51580 Reichshof) werden 40 g Alkyd-Melamin Anreibelack mit 20 g des leicht dispergierbaren Pigments aus Beispiel 3 30 min bei 50°C und 3800 upm dispergiert. 10 g dieses pigmentierten Anreibelacks werden nun schrittweise, unter langsamem Rühren mit einem Glasstab bei Raumtemperatur mit 20 g Auflackgemisch versetzt.

Zur Herstellung der Aufhellung werden 6,0 g des obigen Volltonlacks mit 20 g Alkydmelaminweißlack (30 % TiO₂) durch einfaches Einrühren homogenisiert.

### Beispiel III, Vergleichsbeispiel

Zur Herstellung des Volltonlacks werden 26,4 g Alkydmelamin Anreibelack und 3,6 g C.I. Pigment Violet 23 (C.I. No. 51319, Hostaperm Violett RL spez.) zusammen mit 85 g Glasperlen (3 mm) 30 min am Scandex-Mischer dispergiert. Danach gibt man unter langsamem Rühren mit einem Glasstab 60 g Auflackgemisch zu und dispergiert nochmals für 3 min am Scandex. Im Anschluss werden die Glasperlen durch Filtration entfernt.

Zur Aufhellung werden 7,5 g des obigen Volltonlacks mit 20 g Alkydmelaminweißlack (30 % TiO₂) durch einfaches Einrühren homogenisiert.

### Beispiel IV

In einem Dissolver werden 49,7 g Alkydmelamin Anreibelack mit 10,3 g leicht dispergierbarem Violettpigment (Beispiel 1) 30 min bei 50°C und 3800 Upm dispergiert. 10 g dieses pigmentierten Anreibelacks werden nun schrittweise, unter langsamem Rühren mit einem Glasstab bei Raumtemperatur mit 20 g Auflackgemisch versetzt.

Zur Aufhellung werden 7,5 g des obigen Volltonlacks mit 20 g Alkydmelaminweißlack (30 % TiO₂) durch einfaches Einrühren homogenisiert

Die leicht dispergierbaren Pigmente zeigen im Alkyd Melamin Lack im Vergleich zu den herkömmlichen Pigmenten eine deutlich höhere Farbstärke. Die Tabelle zeigt die resultierende Farbstärke des jeweiligen Pigmentes in einem Alkyd-Melamin Lack nach entsprechender Aufhellung.

| Beispiel | Dispergierart im Anreibelack | Farbstärke |
|---|---|---|
| III | Scandex Mischer | 100 % |
| IV | Dissolver | 122 % |

### Beispiel V:

Die ermittelte Farbstärke in Abhängigkeit der Dispergierzeit zeigt, dass die leicht dispergierbaren, oberflächenbelegten Pigmente bei einer Dispergierung am Scandex-Mischer (Scandex, Bromma, Schweden) bei gleicher Dispergierdauer und Art eine höhere Farbstärke in einem Alkyd-Melamin Lack entwickeln als das Referenz Pigment Hostaperm Violett RL spez. (Clariant). Die unterschiedliche Reinpigmentkonzentration wurde bei dieser Versuchsreihe berücksichtigt und durch eine höhere Pigmentkonzentration bei den oberflächenbelegten, leicht dispergierbaren Pigmenten ausgeglichen.

### Vorgehensweise:

26,4 g Alkydmelamin Anreibelack und 3,6 g Hostaperm Violett RL spez. werden jeweils zusammen mit 85 g Glasperlen (3 mm) 15 min, 30 min und 60 min am Scandex Mischer dispergiert. Danach gibt man unter langsamem rühren mit einem Glasstab 60 g Auflackgemisch zu und dispergiert nochmals für 3 min am Scandex-Mischer. Im Anschluss werden die Glasperlen durch Filtration entfernt. Zur Herstellung des Aufhelllacks werden 7,5 g des obigen Volltonlacks mit 20 g eines Alkyd-Melamin Aufhelllacks (30 % TiO₂) versetzt und homogenisiert.

Bei dem oberflächenbelegten Pigment (Beispiel 1) geht man analog vor, verwendet jedoch 5,1 g Pigment (entspricht 3,6 g Reinpigment) und 24,9 g Anreibelack.

| Pigment | Farbstärke nach 15 min | Farbstärke nach 30 min | Farbstärke nach 60 min |
|---|---|---|---|
| Hostaperm Violett RL spez. (Clariant) | 87 | 97 | 100 |
| Beispiel 1 | 100 | 100 | 100 |

## Patentansprüche

1. Verfahren zum Pigmentieren eines lösemittelhaltigen nicht-wässrigen organischen Beschichtungsmaterials, **dadurch gekennzeichnet, dass** ein wässriger, gefinishter Presskuchen eines organischen Pigments mit Wasser vermischt und in Gegenwart eines amingruppenhaltigen (Meth)Acrylatcopolymers in einem statischen Mischer desagglomeriert wird, dann einer Wasserdampfdestillation unterzogen, filtriert und getrocknet wird, und das dabei entstandene mit amingruppenhaltigen (Meth)Acrylatcopolymeren gecoatete feinteilige organische Pigment mit einem im Vergleich zu dem entsprechenden nicht gecoateten Pigment um mindestens 20 % reduziertem Energieeintrag in ein lösemittelhaltiges organisches Beschichtungsmaterial eingearbeitet wird.

2. Verfahren nach Anspruch 1, **dadurch gekennzeichnet, dass** das organische Beschichtungsmaterial ein lösungsmittelhaltiger Einbrennlack oder ein lösungsmittelhaltiger Zweikomponentenlack ist.

3. Verfahren nach Anspruch 1 oder 2, **dadurch gekennzeichnet, dass** das organische Beschichtungsmaterial ein Alkyd-Melamin-Harzlack; Acryl-Melamin-Harzlack, Polyesterlack oder Highsolid-Acrylharzlack ist.

4. Verfahren nach Anspruch 1, **dadurch gekennzeichnet, dass** das organische Beschichtungsmaterial eine Drucktinte oder Ink-Jet- Tinte ist.

5. Verfahren nach einem oder mehreren der Ansprüche 1 bis 4, **dadurch gekennzeichnet, dass** das organische Pigment ein Pigment aus der Gruppe der Azopigmente, wie Monoazo-, Disazo-, Naphtol-, Benzimidazolon-, Metallkomplexpigmente, oder der polyzyklischen Pigmente, wie Isoindolinon-, Isoindolin-, Anthanthron-, Thioindigo-, Thiazinindigo-, Triarylcarbonium-, Chinophthalon-, Anthrachinon-, Dioxazin-, Phthalocyanin-, Chinacridon-, Chinacridonchinon-, Indanthron, Perylen-, Perinon-, Pyranthron-, Diketopyrrolopyrrol-, Isoviolanthron- und Azomethinpigmente, ist.

6. Verfahren nach einem oder mehreren der Ansprüche 1 bis 5, **dadurch gekennzeichnet, dass** das amingruppenhaltige (Meth)Acrylatcopolymer eine Molmasse zwischen 2000 und 100000 g/mol hat.

7. Verfahren nach einem oder mehreren der Ansprüche 1 bis 6, **dadurch gekennzeichnet, dass** das amingruppenhaltige (Meth)Acrylatcopolymer eine Aminzahl zwischen 20 und 70 mg KOH/g hat, oder dass die Aminogruppen quaternisiert sind.

8. Verfahren nach einem oder mehreren der Ansprüche 1 bis 7, **dadurch gekennzeichnet, dass** das amingruppenhaltige (Meth)Acrylatcopolymer in einem oder mehreren Lösungsmitteln aus der Gruppe Butylacetat, 1-Butanol, 2-Butanol, Isobutanol und Mischungen davon mit Methoxypropylacetat gelöst ist.

9. Verfahren nach einem oder mehreren Ansprüche 1 bis 8, **dadurch gekennzeichnet, dass** das Pigment im statischen Mischer bis zu einer Telichengrößenverteilung von 0,1 bis 10 µm desagglomeriert wird.

10. Verfahren nach einem oder mehreren der Ansprüche 1 bis 9, **dadurch gekennzeichnet, dass** das amingruppenhaltige (Meth)Acrylatcopolymer in einer Menge von 5 bis 50 Gew.-%, bezogen auf das Gesamtgewicht des gecoateten Pigments, auf das Pigment aufgebracht wird.

## Claims

1. A method of pigmenting a solventborne, nonaqueous organic coating material which comprises mixing an aqueous, finished presscake of an organic pigment with water and carrying out deagglomeration in a static mixer in the presence of an amino-containing (meth)acrylate copolymer, then subjecting the deagglomerated mixture to steam distillation, isolating the solid by filtration and drying it and incorporating the resultant finely divided organic pigment coated with amino-containing (meth)acrylate copolymers into a solventborne organic coating material with an energy input reduced by at least 20% as compared with the corresponding uncoated pigment.

2. The method of claim 1, wherein the organic coating material is a solventborne baking varnish or a solventborne two-component varnish.

3. The method of claim 1 or 2, wherein the organic coating material is an alkyd-melamine resin varnish, acrylic-melamine resin varnish, polyester varnish or high-solids acrylic resin varnish.

4. The method of claim 1, wherein the organic coating material is a printing ink or ink-jet ink.

5. The method of one or more of claims 1 to 4, wherein the organic pigment is a pigment from the group of the azo pigments, such as monoazo, disazo, Naphtol, benzimidazolone, and metal complex pigments, or of the polycyclic pigments, such as isoindolinone, isoindoline, anthanthrone, thioindigo, thiazineindigo, triarylcarbonium, quinophthalone, anthraquinone, dioxazine, phthalocyanine, quinacridone, quinacridonequinone, indanthrone, perylene, perinone, pyranthrone, diketopyrrolopyrrole, isoviolanthrone and azomethine pigments.

6. The method of one or more of claims 1 to 5, wherein the amino-containing (meth)acrylate copolymer has a molar mass of between 2000 and 100 000 g/mol.

7. The method of one or more of claims 1 to 6, wherein the amino-containing (meth)acrylate copolymer has an amine number of between 20 and 70 mg KOH/g, or wherein the amino groups are quaternized.

8. The method of one or more of claims 1 to 7, wherein the amino-containing (meth)acrylate copolymer is dissolved in one or more solvents from the group consisting of butyl acetate, 1-butanol, 2-butanol, isobutanol and mixtures thereof with methoxypropyl acetate.

9. The method of one or more of claims 1 to 8, wherein the pigment is deagglomerated in the static mixer to a particle size distribution of 0.1 to 10 µm.

10. The method of one or more of claims 1 to 9, wherein the amino-containing (meth)acrylate copolymer is applied in an amount of 5% to 50% by weight, based on the total weight of the coated pigment, to the pigment.

## Revendications

1. Procédé de pigmentation d'une matière de revêtement organique non aqueuse contenant des solvants, **caractérisé en ce qu'**un gâteau de filtre-presse aqueux fini d'un pigment organique est mélangé avec de l'eau et désaggloméré, en présence d'un copolymère de (méth)acrylate contenant des groupes amino, dans un mélangeur statique, puis soumis à une distillation à la vapeur d'eau, filtré et séché, et **en ce que** le pigment organique finement divisé revêtu de copolymères de (méth)acrylate contenant des groupes amino ainsi formé est incorporé dans une matière de revêtement organique contenant des solvants, avec un apport d'énergie réduit d'au moins 20% par rapport au pigment correspondant non revêtu.

2. Procédé selon la revendication 1, **caractérisé en ce que** la matière de revêtement organique est un vernis au four contenant des solvants ou un vernis à deux composants contenant des solvants.

3. Procédé selon la revendication 1 ou 2, **caractérisé en ce que** la matière de revêtement organique est un vernis à résine alkyde-mélamine, un vernis à résine acryle-mélamine, un vernis polyester ou un vernis à résine acrylique à haute teneur en matières solides.

4. Procédé selon la revendication 1, **caractérisé en ce que** la matière de revêtement organique est une encre d'imprimerie ou une encre pour impression par jet d'encre.

5. Procédé selon l'une ou plusieurs des revendications 1 à 4, **caractérisé en ce que** le pigment organique est un pigment du groupe des pigments azoïques tels que les pigments monoazoïques, diazoïques, naphtène, benzimidazolone, à complexe métallifère, ou des pigments polycycliques tels que les pigments isoindolinone, isoindoline, anthanthrone, thioindigo, thiazinindigo, triarylcarbonium, quinophtalone, anthraquinone, dioxazine, phtalocyanine, quinacridone, quinacridonquinone, indanthrone, pérylène, périnone, pyranthrone, dicétopyrrolopyrrole, isoviolanthrone et azométhine.

6. Procédé selon l'une ou plusieurs des revendications 1 à 5, **caractérisé en ce que** le copolymère de (méth)acrylate contenant des groupes amino a une masse molaire comprise entre 2 000 et 100 000 g/mol.

7. Procédé selon l'une ou plusieurs des revendications 1 à 6, **caractérisé en ce que** le copolymère de (méth)acrylate contenant des groupes amino a un indice d'amine compris entre 20 et 70 mg de KOH/g, ou **en ce que** les groupes amino sont quaternisés.

8. Procédé selon l'une ou plusieurs des revendications 1 à 7, **caractérisé en ce que** le copolymère de (méth)acrylate contenant des groupes amino est dissous dans un ou plusieurs solvants du groupe constitué par l'acétate de butyle, le 1-butanol, le 2-butanol, l'isobutanol et des mélanges de ceux-ci avec du méthoxypropylacétate.

9. Procédé selon l'une ou plusieurs des revendications 1 à 8, **caractérisé en ce que** le pigment est désaggloméré dans un mélangeur statique jusqu'à une distribution granulométrique de 0,1 à 10 µm.

10. Procédé selon l'une ou plusieurs des revendications 1 à 9, **caractérisé en ce que** le copolymère de (méth)acrylate contenant des groupes amino est déposé sur le pigment à raison de 5% à 50% en poids par rapport au poids total du pigment revêtu.
